Europäisches Patentamt

(19) European Patent Office

Office européen des brevets

(11) Publication number : **0 459 698 A1**

# (12) EUROPEAN PATENT APPLICATION

(21) Application number : 91304647.0

(22) Date of filing : 22.05.91

(51) Int. Cl.⁵ : **C09J 151/00**

(30) Priority : 25.05.90 EP 90305720

(43) Date of publication of application :
04.12.91 Bulletin 91/49

(84) Designated Contracting States :
AT BE CH DE DK ES FR GB GR IT LI NL SE

(71) Applicant : VINAMUL LTD.
Mill Lane
Carshalton, Surrey SM5 2JU (GB)

(72) Inventor : Clark, Nigel Leslie
70 Wilmot Way
Banstead, Surrey SM7 2QD (GB)
Inventor : Lewis, Ian Douglas
113 Matlock Crescent
Cheam, Surrey SM3 9SY (GB)
Inventor : Tann, Julie
39 Westminster Road
Sutton, Surrey SM1 3NJ (GB)

(74) Representative : Roscoe, Brian Corrie et al
UNILEVER PLC Patents Division P.O. Box 68
Unilever House
London EC4P 4BQ (GB)

(54) Adhesive compositions.

(57)    The adhesive properties of a vinyl acetate/ethylene copolymer emulsion having grafted polyvinyl alcohol for filmic substrates, eg polypropylene is improved by blending with an acrylate copolymer emulsion optionally including carboxylic monomers.

EP 0 459 698 A1

Jouve, 18, rue Saint-Denis, 75001 PARIS

Field of the invention:

The invention relates to emulsion copolymer blends intended for use as adhesives, in particular packaging applications. Emulsion copolymers are obtained by copolymerising monomers in an emulsified reaction medium. The emulsion copolymer blends of the invention are of value when bonding filmic substrates formed from polymers and having smooth hydrophobic surfaces, an example is polypropylene.

Background to the invention:

Adhesive compositions comprising a copolymer emulsion of a vinyl alkanoate/ethylene copolymer are well characterised for use in lamination processes. Laminating adhesives are required to provide stable adhesion over a range of temperatures but there is a general problem in obtaining suitable adhesion to filmic surfaces. These surfaces are smooth and have hydrophobic properties, an example is polypropylene but polyethylene is also required to be bonded. One article in which such bonding is required is laminates when the filmic substrate is bonded to a second substrate. An example of the second substrate is a cellulosic based substrate, eg paper or board, prepared from cellulosic fibres as a component. The cellulosic substrate will usually be non woven and may include other fibres, for example plastics, eg polyamide, polyester.

The use of vinyl alkanoate/ethylene based adhesive compositions for this purpose has been found to be, in general, limited because the full range of desired adhesive properties cannot be obtained. Adhesives are required to adhere to specified surfaces and thus form bonds and also be suitable for application via machinery.

The desired adhesive compositions may contain other components, for example fillers, surfactants, solvents, tackifying resins, dispersants and antifoam agents.

General description of the invention:

The invention provides an adhesive composition for filmic surfaces based on a vinyl alkanoate/ethylenic hydrocarbon polymer having a grafted polyvinyl alcohol colloidal stabiliser and blended with a carboxylated acrylate copolymer emulsion. This composition provides a good range of adhesive properties on filmic surfaces without the requirement to have plasticisers or thickeners added to the composition.

The adhesive compositions of the invention comprise
i) a copolymer emulsion, having a solids content of about 20% to about 70% by weight, containing
    a) vinyl (C2 to C4) alkanoate,
    b) about 5% to 30% by weight of C2 to C4 ethylenic hydrocarbon, and
    c) a content of grafted polyvinyl alcohol, with
ii) from about 5% to about 15% by weight solids of a acrylate copolymer emulsion optionally containing from about 5% to about 30% by weight carboxylic monomer in the monomer charge.

The content of vinyl alkanoate in the copolymer (i) will usually be in the range 70% to 95% by weight.

This adhesive blend composition will preferably have a viscosity in the range 20 to 60 poise as measured on a Brookfield viscometer and the preferred pH of the blend is 6.0 to 7.5 to provide the appropriate stability of the composition.

Polyvinyl alcohol (PVA) is used as a protective colloid and is introduced into the reaction medium in a manner which ensures it is grafted onto the copolymer particles. Thus the initiations conditions, surfactants present, concentration of PVA at initiation and during reaction, type of PVA and pH will be reaction characteristics which control the grafting of the PVA. Polyvinyl alcohols having a degree of hydrolysis from 70% to 99.8% are usable but the preferred range is from 85% to 95%. The average molecular weight of the PVA is chosen to give the desired final product viscosity. The amount of PVA present in the reaction medium is usually about 1% to about 10% by weight of the monomers with the lower level determining the effect obtained and the effect being unlikely to increase above the upper level. In particular the lower levels are usable if other stabilisers are present.

The presence of polyvinyl alcohol grafted onto the copolymer particles is demonstrated by the solubility properties of the dried polymer film in tetrahydrofuran (THF) or other organic solvents.

The presence of the grafted polyvinyl alcohol was essential to provide the dried or partially dried copolymer film with suitable redispersability in water; this is of value in cleaning machinery used to apply the adhesive and is usually termed "easy-clean". The grafted polyvinyl alcohol is also necessary to give heat resistances.

The preferred vinyl alkanoate is vinyl acetate but vinyl propionate and butyrate are also usable. The preferred ethylenic hydrocarbon is ethylene but propylene, butene and isobutylene may be used. The lower level of 5% ethylenic hydrocarbon is required to give the desired properties while above 30% the heat resistance of the copolymer reduces. At least about 5% by weight solids of the carboxylated acrylate will be required to provide the desired properties while above about 15% the cost effectiveness of this blended copolymer emulsion reduces. Preferably the upper level of carboxylated acrylate copolymer will be about 10% by weight solids.

Other monomers may be present at low, ie up to about 10% by weight of the total monomer content, in the VA/E emulsion. Examples are acrylates, methacrylates, higher vinyl esters, vinyl halides and functional monomers, eg carboxylic acids, and multifunctional monomers, eg triallyl cyanurate and di-allyl phthalate, although care must be taken in their selection because these third monomers can interfere with polyvinyl alcohol grafting or ethylene uptake.

Examples of the carboxylic monomers used in the acrylate emulsion component are acrylic acid and methacrylic acid. The major monomer components will be (meth)acrylates, for example methyl methacrylate, ethyl methacrylate, n-butyl acrylate and other alkyl acrylates. The major monomers are selected to provide a Tg in the range -20°C to +20°C preferably -5°C to +15°C.

Methods for preparing the copolymer emulsions used in the adhesive composition blends of the invention are well characterised in the literature. Polymer synthesis (vols I and II) by Sandler and Karo (Academic Press 1974) and Preparative Methods of Polymer Chemistry (2nd Ed) by Sorensen & Campbell (Interscience 1968) provide preparative information. Methoden der Organische Chemie (Houben-Weyl) Band XIV published by Georg Thieme Verlag Stuttgart (1961) also provides preparative descriptions.

Test Methods:

The properties of the adhesive compositions were measured by the following procedures.

i) Viscosity: A RVT Brookfield viscometer was used at 25°C with spindle 4 at 20 revolutions per minute.

ii) Fibre tear time: This measures the speed at which a bond is formed between cellulosic surfaces.

A layer of adhesive 0.1mm thick was formed between two sheets of Mellotex smooth hi-white paper on a large glass plate using a steel laminating roller (5.8 Kg). The top paper sheet was then peeled back at a rate of 10mm/sec. The time (secs) when a crease occurs in the top sheet parallel to the direction of pull gave the fibre tear time. The average of six tests was taken.

iii) Wet tack time: This measures the speed at which a bond between packaging paper surfaces develops to hold the surfaces in position.

Two sheets of Invercote D board were positioned with smooth sides facing and positioned horizontally with overlapping flapped areas. An adhesive layer 0.01 mm in depth was placed on one overlapping area and the two areas pressed together under a 1 kg weight. After a series of experiments, with the weight removed after an increasing period each time, the time (secs) required to lapse for a holding bond to be formed was noted.

iv) Adhesion to polymer films: A 0.05 mm film of adhesive was cast on the dull side of a Kraft paper sample a sheet of polypropylene was laminated to the adhesive and the latter allowed to dry for 24 hours. A 2.5 cm strip was cut and tested on a Lloyd Tensometer. Failure of the bond was a poor result while failure of a substrate is excellent because a strong bond has been formed.

v) Heat resistance: Two sheets of Mellotex Matt hi-white paper were laminated with 0.1 mm depth of adhesive and conditioned at 25°C, 65% RH for 24 hrs. 1 cm wide stripes were then cut and three were placed in an oven with a 100g load attached to one sheet to give a 180° downward peel. The temperature increased until delamination occurs and the weighted sheet begins to peel.

Specific description of the invention

An example of the adhesive blend of the invention will now be described to illustrate but not limit the invention.

A. Preparation of vinyl acetate/ethylene copolymer

This example describes the preparation of a polyvinyl alcohol (PVA) stabilised copolymer of vinyl acetate and ethylene wherein the polyvinyl alcohol is grated to the polymer.

A polyvinyl alcohol solution was made consisting of:

64.8 parts of 88% hydrolysed PVA at a molecular weight of 29,000
and
25.2 parts of 88% hydrolysed PVA at a molecular weight of 98,000

in 800 parts of water containing 5 ppm ferric ion as the polymerisation catalyst promoter. The pH of this solution was adjusted to 3.0-3.5 with a 50% solution of tartaric acid before heating in a pressure-resistant reactor to 30°C.

After nitrogen purging under pressure the vessel was pressurised to 58 bar with ethylene at 30°C and half of the total liquid monomer burden of 1476 parts of vinyl acetate monomer was introduced.

Polymerisation was initiated by simultaneously introducing separate streams of redox initiators comprising:

A) 3.24 parts of 35% hydrogen peroxide and 0.05 parts of ethylene di-amine tetra-acetic acid in 180 parts of water.

and

B) 3.24 parts of formosul (ie sodium formaldehyde sulphoxylate) in 180 parts of water. The addition of the redox initiator streams (A) and

(B) was at a higher rate (eg two and three times respectively the normal rate) during the first 30 mins and the last 30 minutes of a four and a half hour addition period.

30 minutes after commencing the initiators additions the remaining liquid monomer (vinyl acetate) was introduced over a 3 hr period.

The batch temperature was maintained at 75°C during the polymerisation process.

When the initiator and vinyl acetate additions were complete the batch was cooled to 30-40°C, and two further initiator solutions were added to reduce the residual vinyl acetate level to below 0.5% on total emulsion weight, i.e.

(C) 3.6 parts of t.butyl hydroperoxide and 3.0 parts of sodium bicarbonate in 48 parts of water

and

(D) 3.6 parts of sodium metabisulphite in 36 parts of water.

A final addition of 3.6 parts of Acticide SPX was made to the defoamed emulsion

This copolymer had the monomer amounts of:

| | |
|---|---|
| vinyl acetate | 83 parts by weight |
| ethylene | 17 parts by weight |
| grafted poly vinyl alcohol | upto 5 parts by weight |

## B. Preparation of carboyxlated acrylate copolymer

This example describes the preparation of a carboxylated copolymer of methyl methacrylate and n-butyl acrylate.

The polymer was produced from a monomer composition (A) of:

| | | Parts by weight |
|---|---|---|
| Methyl methacrylate | 174.3 g | 25.28 |
| n-butyl acrylate | 434 g | 62.94 |
| methacrylic acid | 81.2 g | 11.78 |

To this monomer mixture was added (as a molecular weight controller)
n-dodecyl mercaptan        10.5 g.
Into a stirred reactor of 2.0 litre capacity was added
water        360 g.
which was purged with nitrogen for 30 mins whilst heating to 85-87°C.
A surfactant solution (B) was prepared consisting of:

| | |
|---|---|
| Amonic surfactant * (92% active) | 21.0 g |
| Nonionic surfactant ** | 21.0 g |
| Water | 150 g |

* obtained from Lankro Chemicals of Manchester England
under the trade name of Perlankrol PA Cone.

** Synperonic A20 obtained from Cargo Fleet Chemicals Co
Ltd (lauryl alcohol 20 EO).

An initiator solution (C) was prepared consisting of:

Ammonium persulphate 3.5 g
Water 50

When the initial reactor water charge had been purged and heated to 85-87°C then monomer mixture (A) including n-dodecyl mercaptan, surfactant solution (B) and initiator solution (C) were added continuously at a uniform rate for 4 hrs whilst maintaining the internal temperature in the range 84-86°C.

When the continuous additions were complete the batch temperature was held at 85°C for 5 minutes. Methyl methacrylate (2.1g) was then added and the batch held at 85°C for 10 mins. Initiator solutions (D) and (E) were prepared:

(D) t-butyl hydroperoxide 0.7g
water 5.0g

```
(E)   sodium formaldehyde sulphoxylate    0.7g
      wate                                 5.0g
```

Initiator solutions (D) and (E) were added to the reactor at the end of the 10 minutes period, and the batch held at 85°C for a further 30 minutes.

The batch was then cooled to 30°C and biocide was added whilst stirring for a further 15 minutes: i.e. Acticide SPX 1.56g

The pH of the final emulsion is adjusted from pH 1.5 to 5.0 using ammonia solution such that the final solid content of the product does not drop below 55%.

The acrylic copolymer emulsion described above is prepared at approximately 56% non-volatile content (56.9%) and at a pH of 1.5. It had a Tg of -5°C.

10 parts of acrylic copolymer at 55% solid content is added with stirring to 90 parts of the grafted VA/E copolymer. The pH of the mixture is adjusted finally to 6.5.

### Results

The basic vinyl acetate/ethylene (VA/E) copolymer emulsion and its blend were tested for characteristics, both in-use and adhesion.

|  | VA/E emulsion | Blend |
|---|---|---|
| Solids content | 55% | 55% |
| Viscosity (poise) | 30 | 30 |
| Fibre tear time (secs)* | 20 | 26 |
| Wet tack time (secs) * | 17 | 19 |
| Easy clean | excellent | good |
| Heat resistance(°C) | 178° | 158° |
| polypropylene adhesion | poor | excellent |

* measured after dilution to 20 poise.

Thus the VA/E emulsion having grafted polyvinyl alcohol has the desired adhesive and in-use properties, except for polypropylene adhesion. Addition of the carboxylated acrylate emulsion improves the polypropylene adhesion while maintaining the other properties at satisfactory levels.

## Claims

1. An adhesive composition comprising a blend of:
   i) a copolymer emulsion, having a solids content of about 20% to about 70% by weight, containing
      a) vinyl (C2 to C4) alkanoate,
      b) about 5% to 30% by weight of C2 to C4 ethylenic hydrocarbon, and
      c) a content of grafted polyvinyl alcohol, with
   ii) from about 5% to about 15% by weight solids of a acrylate copolymer emulsion.

2. An adhesive composition as claimed in claim 1 wherein the acrylate copolymer contains from about 5% to about 30% by weight of carboxylic monomer.

3. An adhesive composition as claimed in claim 1 or 2 having a viscosity in the range 20 to 60 poise.

4. An adhesive composition as claimed in claim 1, 2 or 3 wherein the acrylate copolymer has a Tg in the range -20°C to +20°C.

5. A method of forming a laminate of a filmic substrate and a cellulosic based substrate wherein a layer of the adhesive composition of claim 1 is interposed between the substrate which are then subjected to inward pressure until a bond is formed.

European Patent
Office

**EUROPEAN SEARCH REPORT**

Application Number

EP 91 30 4647

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 177 983 (HOECHST) <br> * Claims 1,2 * | 1,2 | C 09 J 151/00 |
| A | FR-A-2 351 136 (WACKER CHEMIE) <br> * Claim 1; page 4, line 10 - page 4, line 4 * | 1,2 | |
| | | | TECHNICAL FIELDS SEARCHED (Int. Cl.5) |
| | | | C 09 J |

The present search report has been drawn up for all claims

| Place of search | Date of completion of the search | Examiner |
|---|---|---|
| THE HAGUE | 26-07-1991 | MEULEMANS R.A.M.G.G. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P0401)